# FASCICULE DE BREVET EUROPEEN

(11) **EP 1 399 799 B1**
(45) Date de publication et mention de la délivrance du brevet: **01.03.2006**
(21) Numéro de dépôt: 01931317.0
(22) Date de dépôt: 29.05.2001
(51) Int. Cl.: G06F 1/16

(54) **ORDINATEUR MODULAIRE**
MODULARER RECHNER
MODULAR COMPUTER

(43) Date de publication de la demande: 24.03.2004
(73) Titulaire: Smartdata SA, 1920 Martigny (CH)
(72) Inventeur: BUTTET, Jean-Pierre, CH-1920 Martigny (CH)
(74) Mandataire: Besse, François
(86) Numéro de dépôt international: PCT/CH2001/000334
(87) Numéro de publication internationale: WO 2002/097596

(56) Documents cités:
- WO-A2-00/00880
- DE-A1- 19 639 700
- GB-A- 2 299 878
- US-B1- 6 229 700

## Description

La présente invention se rapporte au domaine des ordinateurs.

Dans sa structure la plus fréquente, un ordinateur comprend plusieurs éléments, notamment une unité centrale (microprocesseur, disque dur, mémoire RAM, etc...), un dispositif de saisie (p.ex. un clavier), des moyens d'affichage, des moyens de restitution sonore et une interface de communication avec un réseau distant (p.ex. Internet).
La demande de brevet britannique GB 2 299 878 A et la demande de brevet internationale WO 00/00880 A2 décrivent des ordinateurs tels que définis dans l'alinéa précédent.

Cette pluralité d'éléments rend le coût d'un ordinateur relativement élevé, une utilisation souvent peu confortable et/ou son transport malaisé.

La demande de brevet européen EP 1 059 809 A2 décrit un système comprenant une unité centrale, un dispositif de saisie, une interface de communication avec un réseau distant et des moyens d'affichage et de restitution sonore, caractérisé par le fait qu'il comprend les trois éléments distincts suivants :
- un premier élément comprenant l'unité centrale qui contient des moyens de stocker et d'exécuter des programmes informatiques et des moyens de stockage de données.
- un deuxième élément comprenant le dispositif de saisie de données, l'interface de communication avec un réseau distant et des moyens de transmission sans fil avec ledit premier élément,
- un troisième élément comprenant les moyens d'affichage et des moyens de restitution sonore et des moyens de connexion au premier élément,

ledit premier élément étant de taille réduite (format de poche) et comprend en outre des moyens de connexion au troisième élément et des moyens de réception, respectivement d'émission, des signaux émis, respectivement reçus, par ledit deuxième élément.

L'objet de la demande EP 1 059 809 A2 n'est cependant pas un ordinateur mais seulement un système permettant d'utiliser le moniteur d'un appareil de télévision pour afficher, càd agrandir, l'écran d'un téléphone portable.

La présente invention vise notamment à remédier aux problèmes précites.

Elle a pour but de permettre la réalisation d'un micro-ordinateur portable qui est capable d'utiliser des installations existantes comme moyen de communication avec des utilisateurs ou des réseaux distants.

On constate qu'actuellement, les téléphones mobiles, les ordinateurs de poche (type organiseurs électroniques), les téléviseurs, les écrans d'ordinateur, les projecteurs vidéo sont très répandus.

L'invention vise donc à tirer profit de la présence de ces éléments, elle concerne un ordinateur comprenant une unité centrale, un dispositif de saisie (par ex. un clavier et/ou une souris, un écran tactile ou tout autre dispositif de pointage ou de saisie), une interface de communication avec un réseau distant et des moyens d'affichage et/ou de restitution sonore, l'ordinateur est caractérisé par le fait qu'il comprend les trois éléments distincts suivants :
a) un premier élément comprenant ladite unité centrale qui contient des moyens de stocker et d'exécuter des programmes informatiques et des moyens de stockage de données.
b) un deuxième élément comprenant ledit dispositif de saisie de données, ladite interface de communication (avec ou sans fil) avec un réseau distant et des moyens de transmission sans fil (p.ex. par radio ou par infrarouge) avec ledit premier élément,
c) un troisième élément comprenant les dits moyens d'affichage et/ou des moyens de restitution sonore et des moyens de connexion audit premier élément.

ledit premier élément est de taille réduite (format de poche) et comprend en outre des moyens de connexion audit troisième élément et des moyens de réception, respectivement d'émission, des signaux émis, respectivement reçus, par ledit deuxième élément.

Par ailleurs, le deuxième élément sert simultanément de :
- passerelle de communication entre le réseau distant et le dit premier élément
- moyen, pour l'utilisateur dudit deuxième élément, d'envoyer des commandes qui sont reçues et interprétées par ledit premier élément.

Le micro-ordinateur selon l'invention peut par exemple utiliser l'écran d'un téléviseur comme dispositif d'affchage, les enceintes acoustiques associées au téléviseur comme élément de restitution du son, le clavier ou l'écran tactile d'un téléphone mobile comme interface utilisateur; l'interface de communication radio étant obtenue par ce même téléphone mobile qui fonctionne également comme passerelle pour accéder à un réseau de communication distant.

En outre, le résultat obtenu avec l'ordinateur selon l'invention peut résulter en un ensemble plus performant que les ordinateurs de l'état de la technique. En effet, ce micro-ordinateur est par exemple capable de restituer du son sur les enceintes acoustiques haute fidélité d'un téléviseur auquel il est raccordé, ou d'offrir une image géante à partir d'un projecteur vidéo.

Quelques exemples non-limitatifs de réalisation de l'invention sont décrits ci-après au moyen des figures suivantes :
La figure 1 illustre un mode de réalisation de l'ordinateur selon l'invention.
La figure 2 décrit un mode de réalisation du premier élément.

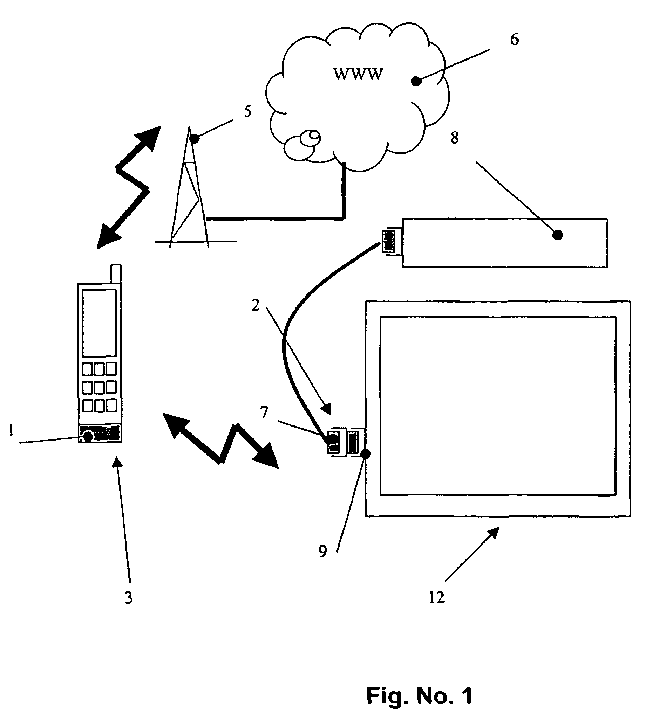

Le dispositif représenté à la figure 1 est constitué d'un premier élément 2 qui comprend une unité centrale, un téléphone mobile 3 et un poste de télévision classique 12.

Une interface de communication sans fil 1, par exemple de type Bluetooth, 802.11b ou autre, est connectée ou intégrée dans le téléphone mobile 3.

Le téléphone mobile 3 est capable d'effectuer une liaison avec un réseau de télécommunication distant 6 (par exemple Internet) en effectuant une transmission de données sans fil avec une antenne fixe 5 connectée au réseau distant 6, en utilisant son interface de communication standard, par exemple GSM, GPRS, UMTS ou autre.

Le premier élément 2 peut accéder à des données situées sur le réseau distant 6 via l'interface 1 du téléphone mobile 3. Dans ce cas, le téléphone mobile 3 fonctionne comme passerelle de communication entre le réseau distant 6 et le premier élément 2.

Le premier élément 2 est de faible taille, de sorte qu'il peut être connecté de façon fixe ou amovible sur une entrée de signal du poste de télévision 12. Dans l'exemple illustré à la figure 1, le premier élément 2 est fixé sur une prise SCART /Peritel 9 du téléviseur 12. Le premier élément peut ainsi envoyer des signaux audio et vidéo vers ce même téléviseur 12.

Si nécessaire, un autre câble 7, provenant d'une source vidéo, par exemple un enregistreur vidéo 8, peut être connecté sur le premier élément 2. Dans ce cas, le premier élément 2 assure l'acheminement des signaux entre l'enregistreur vidéo 8 et le moniteur 12, permettant un fonctionnement conventionnel du système.

Une interface de communication sans fil comprise dans le premier élément 2 permet d'échanger des données avec l'interface correspondante 1 du téléphone mobile 3.

Un programme informatique contenu dans le téléphone mobile 3 permet à l'utilisateur d'utiliser son téléphone mobile 3 pour saisir et envoyer les commandes nécessaires à destination du premier élément 2. Le téléphone mobile 3 contient un menu de commandes d'envoi vers le premier élément 2 (le menu peut par exemple être affiché sur l'écran d'affichage du téléphone mobile 3). De la sorte, un utilisateur peut sélectionner et exécuter la commande voulue en utilisant la clavier du téléphone mobile 3.

Une commande permet à l'utilisateur du téléphone mobile 3 de transformer son téléphone en passerelle, permettant ainsi au premier élément 2 de se connecter à un réseau distant, par exemple le réseau Internet 6 au travers l'infrastructure 5 fixe du réseau de téléphone mobile, au travers du téléphone mobile 3 et de son autre interface de communication sans fil 1.

De cette manière, le premier élément 2 peut être connecté par exemple sur l'Internet 6.

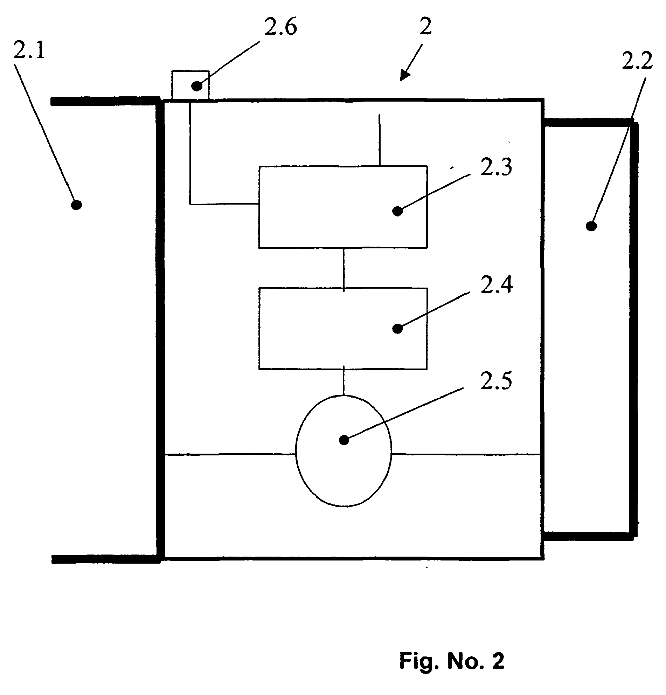

Le premier élément 2 est illustré de façon plus détaillée à la figure 2. Il est composé d'un petit boîtier, avantageusement de format de poche, sur lequel est fixé le système de connexion électrique au téléviseur extérieur, projecteur vidéo ou moniteur d'ordinateur.

Par exemple , dans le cas d'une connexion à un téléviseur, on fixe un connecteur SCART / Peritel (variante possible de connecteur) femelle 2.1 sur la partie gauche, et un connecteur Peritel mâle 2.2 sur la partie droite.

Les signaux électriques audio et vidéo peuvent traverser le premier élément 2 en passant du connecteur 2.1 , et en traversant sans altération le dispositif électronique 2.5, pour aller au connecteur 2.2. Ainsi, comme le montre la figure 1, le premier élément 2 peut être connecté au téléviseur en enfichant le connecteur 2.2 dans la prise Peritel 9 du téléviseur.

De même, le câble optionnel arrivant normalement au téléviseur 12 (par exemple, un câble 7 provenant d'un enregistreur vidéo 8 ou toute autre source de signal), peut être connecté au téléviseur 12 par l'intermédiaire du connecteur 2.1 fixé sur le premier élément 2.

Le premier élément 2, peut par exemple être facilement transporté dans une poche d'un endroit à l'autre, et il peut être connecté, même pour une utilisation temporaire, directement sur le connecteur de n'importe quel téléviseur disposant de ce type de connexion. Ce type de connexion étant standardisé, le premier élément 2 peut être monté sur un grand nombre de téléviseurs standards.

Le premier élément 2 contient une interface de communication 2.3 pouvant établir une transmission de donnée 8 sans fil entre un appareil externe, par exemple le téléphone mobile 3, et le système électronique à microprocesseur 2.4 contenu dans le premier élément 2.

Le système à microprocesseur 2.4 est capable, grâce à un programme informatique qu'il exécute, entre autres, des actions suivantes :

- Interpréter les commandes en provenance du téléphone 3. ; ces commandes étant générées par l'utilisateur qui actionne le téléphone mobile 3. - Interpréter les données qu'il aura cherchées sur un réseau distant 6.

De cette manière, par exemple, des commandes générées par l'utilisateur du téléphone mobile 3 vont démarrer à l'intérieur du système 2.4 l'exécution d'un programme type explorateur Internet (browser).

Cet explorateur peut par exemple aller chercher sur un réseau distant (via le téléphone mobile 3) des données. Ces données sont interprétées par le programme explorateur Internet et les pages Internet résultantes sont également transformées par 2.4 sous la forme de signaux audio et vidéo correspondants qui sont envoyés pour y être affichés et restitués vers le téléviseur 12.

Le téléviseur 12 peut également intégrer des enceintes acoustiques afin de restituer du son.

Le dispositif optionnel 2.5 peut être commandé par le système 2.4, pour établir la communication bidirectionnelle, soit entre 2.1 et 2.2, ou 2.4 et 2.2 (aiguillage commandé).

Le premier élément 2 peut comporter un ou plusieurs interrupteurs 2.6 permettant à l'utilisateur d'enclencher, de déclencher ou faire la remise à zéro du premier élément 2. Le premier élément 2 peut être alimenté par une source d'alimentation électrique externe, ou peut être alimenté par l'entremise des connecteurs 2.1 et ou 2.2, grâce aux appareils qui y sont connectés.

Les connecteurs SCART / Peritel mentionnés dans ce document le sont à titre d'illustration d'une variante possible, ils peuvent être substitués par tout autre type de connecteur Audio / Vidéo soit analogique soit digital afin de connecter le premier élément 2 à l'élément de restitution du son et de l'image 12.

Dans une autre variante d'exécution, la partie vidéo n'est pas traitée par le premier élément 2 , seule la partie son est traitée. Le premier élément 2 peut alors être connecté à l'élément de restitution du son 12 (téléviseur dont seule la partie son est utilisée), ou à un autre système de restitution du son, tel que chaîne haute fidélité, radio qui se substitue à l'élément 12.

Dans une autre variante d'exécution, les connections audio et vidéo sont remplacées par une autre interface de communication sans fil afin de connecter le premier élément 2 à l'élément de restitution du son et de l'image 12.

Le téléphone mobile 3 est mentionné à titre d'exemple, il peut être substitué par tout ordinateur, organiseur de poche, ordinateur portable ou de bureau, et autre dispositif électronique capable d'effectuer les liaisons sans fil telles que décrites plus haut.

Dans une variante d'utilisation, les deux interfaces sans fil du téléphone mobile 3 peuvent être substituées par deux canaux radio sur la même interface sans fil.

Dans une autre variante d'utilisation, les deux interfaces sans fil du téléphone mobile 3 peuvent être substituées par une interface sans fil de type radio et une interface infrarouge.

Dans une autre variante d'utilisation, les deux interfaces sans fil du téléphone mobile 3 peuvent être substituées par deux interfaces infrarouges.

Dans une variante d'utilisation, plusieurs téléphones mobiles de types 3 peuvent être simultanément utilisés par plusieurs utilisateurs. Dans ce cas, un ou plusieurs téléphones peuvent fonctionner en passerelle pour connecter le premier élément 2 au réseau distant, de même qu'un ou plusieurs téléphones peuvent envoyer des signaux de commande à destination du premier élément 2.

Dans une autre variante d'exécution, les connexions audio et vidéo 2.1 et ou 2.2 sont remplacées par une autre interface de communication sans fil avec le dispositif 12.

On trouvera ci-après quelques exemples non-limitatifs de fonctionnement de l'ordinateur selon l'invention.

### Connexion à Internet

L'utilisateur connecte un premier élément 2 sur un téléviseur, un écran d'ordinateur, un projecteur vidéo, des lunettes permettant l'affichage d'image vidéo ou tout autre dispositif permettant d'afficher des images vidéo et optionnellement de restituer du son.

L'utilisateur actionne un programme contenu dans son téléphone mobile 3. Dans une variante d'utilisation, ce programme est envoyé et mis à disposition par le premier élément 2 vers le téléphone 3 , par exemple sous la forme d'une aplet.

Ce programme, lorsqu'il est exécuté, ouvre un canal de communication entre le réseau distant 6 et le système à microprocesseur 2.4 contenu dans le premier élément 2.

### Les signaux passent alors par le chemin suivant défini par le point suivant :

Réseau distant 6, infrastructure fixe 5, téléphone mobile 3 (par son interface sans fil GSM ou GPRS ou UMTS ou autre), puis par une autre interface sans fil 1 du téléphone 3, vers l'interface sans fil 2.3 du premier élément 2 qui envoie les signaux sur le dispositif à microprocesseur 2.4.

Par ce moyen, l'utilisateur peut par exemple connecter le système du microprocesseur 2.4 à l'internet 6.

De manière remarquable, et grâce à son téléphone 3, l'utilisateur peut simultanément au téléchargement des données du réseau distant vers le dispositif 2.4, envoyer des commandes vers ce même système 2.4. Les commandes sont par exemple entrées sur le clavier, l'écran tactile, la souris ou le système de reconnaissance vocale de l'appareil 3 et acheminées vers 2.4 en empruntant le même chemin que les données provenant du réseau distant.

Par exemple, une commande peut être envoyée pour ordonner à 2.4 de consulter un site WEB correspondant à une adresse spécifiée par l'utilisateur. Le système 2.4 établit la connexion, télécharge les données s'y trouvant, et les interprète afin de générer les signaux vidéo et ou sonores représentant la page WEB. Ces signaux peuvent être affichés sur le téléviseur et le son restitué sur ses enceintes acoustiques.

De manière remarquable, l'utilisateur qui dispose déjà d'un téléphone mobile et d'un téléviseur classique peut consulter l'Internet, grâce à la mise en oeuvre du premier élément de poche 2.

### Plate-forme de jeu

L'utilisateur connecte un premier élément 2 sur un téléviseur, un écran d'ordinateur, un projecteur vidéo ou tout autre dispositif permettant d'afficher des images vidéo et optionnellement de restituer du son.

L'utilisateur actionne un programme contenu dans son téléphone mobile 3. Dans une variante d'utilisation, ce programme est envoyé et mis à disposition par le premier élément 2 vers le téléphone 3 , par exemple sous la forme d'une aplet.

Ce programme, lorsqu'il est exécuté, ouvre un canal de communication entre le réseau distant 6 et le système à microprocesseur 2.4 contenu dans le premier élément 2.

### Les signaux passent alors par le chemin suivant défini par le point suivant :

Réseau distant 6, infrastructure fixe 5, téléphone mobile 3 (par son interface sans fil GSM ou GPRS ou UMTS ou autre), puis par une autre interface sans fil 1 du téléphone 3, vers l'interface sans fil 2.3 du dispositif qui envole les signaux sur le dispositif à microprocesseur 2.4.

Par ce moyen, l'utilisateur peut par exemple connecter le système à microprocesseur 2.4 à l'Internet 6. L'utilisateur peut simultanément, envoyer des commandes vers ce même système 2.4, les commandes sont par exemple entrées sur le clavier, l'écran tactile ou la souris de l'appareil 3 et acheminées vers 2.4 en empruntant le même chemin que les données provenant du réseau distant.

Une commande peut être envoyée par l'utilisateur, grâce à son téléphone 3 pour ordonner à 2.4 télécharger un jeu depuis un site WEB se trouvant sur Internet.

Le système 2.4 se trouvant dans le premier élément 2, établit la connexion, télécharge le jeu désiré et lance son exécution.

Les images et optionnellement le son associé sont générées par le système 2.4 et affichées sur le dispositif d'affichage 12 auquel il est connecté. Si des signaux sonores sont présents, ils sont restitués par les enceintes acoustiques associées à l'affichage 12 utilisé, par exemple les enceintes acoustiques du téléviseur.

Simultanément, l'unité centrale 2.4 envoie à destination du téléphone mobile de chaque joueur présent un petit programme (par exemple un aplet).

Ce programme, lorsque qu'il est exécuté, permet à chaque utilisateur d'utiliser son téléphone comme manette de jeu. Des pressions sur certaines touches du téléphone vont déclencher l'envoi d'informations par l'interface sans fil 1 de chaque téléphone 3, à destination de l'unité 2.4. Cette unité interprète les signaux respectifs comme les commandes de contrôle de jeu pour le compte de chaque joueur.

De cette manière, un joueur peut télécharger un jeu grâce à son téléphone mobile 3, le faire exécuter par l'unité 2.4 et partager avec plusieurs joueurs le plaisir de jouer.

## Revendications

1. Ordinateur comprenant une unité centrale, un dispositif de saisie, une interface de communication avec un réseau distant et des moyens d'affichage et/ou de restitution sonore, **caractérisé par le fait qu'**il comprend les trois éléments distincts suivants :
a) un premier élément (2) comprenant ladite unité centrale qui contient des moyens de stocker et d'exécuter des programmes informatiques et des moyens de stockage de données,
b) un deuxième élément (3) comprenant ledit dispositif de saisie de données, ladite interface de communication avec un réseau distant (6) et des moyens de transmission sans fil (1) avec ledit premier élément,
c) un troisième élément (12) comprenant les dits moyens d'affichage et/ou desdits moyens de restitution sonore et des moyens de connexion (9) audit premier élément,
ledit premier élément (2) étant de taille réduite, format de poche, et comprenant en outre des moyens de connexion (2.2) audit troisième élément (12) et des moyens (2.3) de réception, respectivement d'émission, des signaux émis, respectivement reçus, par ledit deuxième élément (3),
le deuxième élément (3) servant simultanément de :
- passerelle de communication entre le réseau distant (6) et le premier élément (2).
- moyen, pour l'utilisateur dudit deuxième élément (3), d'envoyer des commandes qui sont reçues et interprétées par le premier élément (2).

2. Ordinateur selon la revendication 1, **caractérisé par le fait que** le deuxième élément (3) est un téléphone mobile.

3. Ordinateur selon la revendication 1, **caractérisé par le fait que** le deuxième étément (3) est un ordinateur de poche ou agenda électronique de poche.

4. Ordinateur selon la revendication 1, **caractérisé par le fait que** le deuxième élément (3) est un ordinateur portable, ordinateur de bureau ou serveur.

5. Ordinateur selon l'une quelconque des revendications 1 à 4, **caractérisé par le fait que** le troisième élément (12) est un écran de télévision classique.

6. Ordinateur selon la revendication 5, **caractérisé par le fait que** les moyens de connexion (2.2) du premier élément (2) sont constitués d'une fiche Peritel SCART mâle destinée à se connecter à la prise (9) correspondante Peritel SCART du troisième élément (12).

7. Ordinateur selon la revendication 6, **caractérisé par le fait que** le premier élément (2) se présente sous la forme d'une pièce intercalaire qui contient en outre une fiche Peritel SCART femelle (2.1).

8. Ordinateur selon la revendication 5, **caractérisé par le fait que** les moyens de connexion (2.2) du premier élément sont constitués de connecteurs pour signaux audio et vidéo et ou données, en format analogique ou numérique, destinés à se connecter aux connecteurs correspondants du troisième élément (12).

9. Ordinateur selon l'une quelconque des revendications 1 à 4, **caractérisé par le fait que** le troisième élément est un écran d'ordinateur classique ou un projecteur vidéo.

10. Ordinateur selon la revendication 9, **caractérisé par le fait que** les moyens de connexion du premier élément sont constitués d'une prise VGA ou SVGA femelle, ou autre connecteur vidéo femelle destinée à se connecter à la prise correspondante mâle de l'écran d'ordinateur ou du projecteur vidéo.

11. Ordinateur selon la revendication 10, **caractérisé par le fait que** le premier élément (2) se présente sous la forme d'une pièce intercalaire qui contient en outre une fiche VGA ou SVGA mâle, ou autre connecteur vidéo ou mâle.

12. Ordinateur selon la revendication 9, **caractérisé par le fait que** les moyens de connexion (2.2) du premier élément (2) sont constitués de connecteurs pour signaux audio vidéo et ou données, analogiques ou numériques, destinés à se connecter aux connecteurs correspondants de l'écran d'ordinateur ou du projecteur vidéo.

13. Ordinateur selon l'une quelconque des revendications 1 à 4, **caractérisé par le fait que** le troisième élément est un élément ne restituant que le son, tel que chaîne haute fidélité, amplificateur de musique avec enceintes acoustiques associées, autoradio, radio, baladeur, enregistreur de musique ou tout autre système de restitution, de transmission et d'enregistrement du son.

14. Ordinateur selon la revendication 13, **caractérisé par le fait que** les moyens de connexion du premier élément sont constitués de connecteurs pour signaux audio et ou données, analogiques ou numériques, destinés à se connecter aux connecteurs correspondants du système de restitution, de transmission ou d'enregistrement du son.

15. Méthode de communication utilisant les trois éléments distincts suivants :
a) un premier élément (2) comprenant une unité centrale qui contient des moyens de stocker et d'exécuter des programmes informatiques et des moyens de stockage de données,
b) un deuxième élément (3) comprenant un dispositif de saisie de données, une interface de communication avec un réseau distant (6) et des moyens de transmission sans fil (1) avec ledit premier élément,
c) un troisième élément (12) comprenant des moyens d'affichage et/ou des moyens de restitution sonore et des moyens de connexion (9) audit premier élément,
ledit premier élément (2) étant de taille réduite, format de poche, et comprenant en outre des moyens de connexion (2.2) audit troisième élément (12) et des moyens (2.3) de réception, respectivement d'émission, des signaux émis, respectivement reçus, par ledit deuxième élément (3); la méthode étant **caractérisée par le fait qu'**elle utilise simultanément ledit deuxième élément (3) comme :
- passerelle de communication entre le réseau distant (6) et ledit premier élément (2),
- moyen, pour l'utilisateur dudit deuxième élément (3), d'envoyer des commandes qui sont reçues et interprétées par ledit premier élément (2).

16. Méthode de communication selon la revendication 15 **caractérisée en ce qu'**elle utilise un ordinateur selon l'une quelconque des revendications 2 à 14.

## Claims

1. Computer comprising a central unit, an input device, an interface for communication with a remote network and display and/or sound reproduction means, **characterized in that** it comprises the following three separate elements:
a) a first element (2) comprising said central unit which contains means for storing and executing computer programs and means for storing data,
b) a second element (3) comprising said data input device, said interface for communication with a remote network (6) and means (1) of wireless transmission with said first element,
c) a third element (12) comprising said display means and/or said sound reproduction means and means of connection (9) to said first element,
said first element (2) being of reduced size, pocket format, and furthermore comprising means of connection (2.2) to said third element (12) and means (2.3) of receiving, respectively sending, signals sent, respectively received, by said second element (3),
the second element (3) simultaneously serving as
- communication gateway between the remote network (6) and the first element (2),
- means, for the user of said second element (3), to dispatch commands which are received and interpreted by the first element (2).

2. Computer according to Claim 1, **characterized in that** the second element (3) is a mobile telephone.

3. Computer according to Claim 1, **characterized in that** the second element (3) is a pocket computer or pocket electronic diary.

4. Computer according to Claim 1, **characterized in that** the second element (3) is a portable computer, office computer or server.

5. Computer according to any one of Claims 1 to 4, **characterized in that** the third element (12) is a conventional television screen.

6. Computer according to Claim 5, **characterized in that** the means of connection (2.2) of the first element (2) consist of a SCART plug intended to connect up to the corresponding SCART socket (9) of the third element (12).

7. Computer according to Claim 6, **characterized in that** the first element (2) takes the form of an insert which furthermore contains a SCART socket (2.1).

8. Computer according to Claim 5, **characterized in that** the means of connection (2.2) of the first element consist of connectors for audio and video signals and/or data, in analogue or digital format, intended to connect up to the corresponding connectors of the third element (12).

9. Computer according to any one of Claims 1 to 4, **characterized in that** the third element is a conventional computer screen or a video projector.

10. Computer according to Claim 9, **characterized in that** the means of connection of the first element consist of a VGA or SVGA socket, or other female video connector intended to connect up to the corresponding plug of the computer screen or of the video projector.

11. Computer according to Claim 10, **characterized in that** the first element (2) takes the form of an insert which furthermore contains a VGA or SVGA plug, or other male video connector.

12. Computer according to Claim 9, **characterized in that** the means of connection (2.2) of the first element (2) consist of connectors for audio video signals and/or data, analogue or digital, intended to connect up to the corresponding connectors of the computer screen or of the video projector.

13. Computer according to any one of Claims 1 to 4, **characterized in that** the third element is an element reproducing sound only, such as a hi-fi deck, music amplifier with associated acoustic cabinets, car radio, radio, walkman, music recorder or any other sound reproduction, transmission and recording system.

14. Computer according to Claim 13, **characterized in that** the means of connection of the first element consist of connectors for audio signals and/or data, analogue or digital, intended to connect up to the corresponding connectors of the sound reproduction, transmission or recording system.

15. Method of communication using the following three separate elements:
a) a first element (2) comprising a central unit which contains means for storing and executing computer programs and means for storing data,
b) a second element (3) comprising a data input device, an interface for communication with a remote network (6) and means (1) of wireless transmission with said first element,
c) a third element (12) comprising display means and/or sound reproduction means and means of connection (9) to said first element,
said first element (2) being of reduced size, pocket format, and furthermore comprising means of connection (2.2) to said third element (12) and means (2.3) of receiving, respectively sending, signals sent, respectively received, by said second element (3);
the method being **characterized in that** it simultaneously uses said second element (3) as:
- communication gateway between the remote network (6) and said first element (2),
- means, for the user of said second element (3), to dispatch commands which are received and interpreted by said first element (2).

16. Method of communication according to Claim 15, **characterized in that** it uses a computer according to any one of Claims 2 to 14.

## Patentansprüche

1. Computer, der eine Zentraleinheit, eine Eingabevorrichtung, eine Kommunikationsschnittstelle mit einem fernen Netz und Mittel zur Anzeige und/oder Tonwiedergabe aufweist, **dadurch gekennzeichnet, dass** er die drei folgenden verschiedenen Elemente aufweist:
a) ein erstes Element (2), das die Zentraleinheit aufweist, die Mittel zum Speichern und Ausführen der Rechnerprogramme und Datenspeichermittel enthält,
b) ein zweites Element (3), das die Dateneingabevorrichtung, die Kommunikationsschnittstelle mit einem fernen Netz (6) und drahtlose Übertragungsmittel (1) mit dem ersten Element aufweist,
c) ein drittes Element (12), das die Anzeigemittel und/oder die Tonwiedergabemittel und Mittel (9) zur Verbindung mit dem ersten Element aufweist,
wobei das erste Element (2) eine reduzierte Größe im Taschenformat hat und außerdem Verbindungsmittel (2.2) mit dem dritten Element (12) und Mittel (2.3) zum Empfang der vom zweiten Element (3) gesendeten Signale bzw. zum Senden der vom zweiten Element empfangenen Signale aufweist,
wobei das zweite Element (3) gleichzeitig dient als:
- Kommunikationsgateway zwischen dem fernen Netz (6) und dem ersten Element (2),
- für den Benutzer des zweiten Elements (3) als Mittel zum Senden von Befehlen, die vom ersten Element (2) empfangen und interpretiert werden.

2. Computer nach Anspruch 1, **dadurch gekennzeichnet, dass** das zweite Element (3) ein Mobiltelefon ist.

3. Computer nach Anspruch 1, **dadurch gekennzeichnet, dass** das zweite Element (3) ein Taschencomputer oder ein elektronischer Taschenterminkalender ist.

4. Computer nach Anspruch 1, **dadurch gekennzeichnet, dass** das zweite Element (3) ein tragbarer Computer, ein Bürocomputer oder ein Server ist.

5. Computer nach einem der Ansprüche 1 bis 4, **dadurch gekennzeichnet, dass** das dritte Element (12) ein klassischer Fernsehbildschirm ist.

6. Computer nach Anspruch 5, **dadurch gekennzeichnet, dass** die Verbindungsmittel (2.2) des ersten Elements (2) aus einem Peritel-SCART-Stecker bestehen, der dazu bestimmt ist, mit der entsprechenden Peritel-SCART-Anschlussbuchse (9) des dritten Elements (12) verbunden zu werden.

7. Computer nach Anspruch 6, **dadurch gekennzeichnet, dass** das erste Element (2) in Form eines Zwischenbauteils vorliegt, das außerdem eine Peritel-SCART-Steckdose (2.1) enthält.

8. Computer nach Anspruch 5, **dadurch gekennzeichnet, dass** die Verbindungsmittel (2.2) des ersten Elements aus Verbindern für Audio- und Videosignale und/oder Daten in analogem oder digitalem Format bestehen, die dazu bestimmt sind, mit den entsprechenden Verbindern des dritten Elements (12) verbunden zu werden.

9. Computer nach einem der Ansprüche 1 bis 4, **dadurch gekennzeichnet, dass** das dritte Element ein klassischer Computerbildschirm oder ein Videoprojektor ist.

10. Computer nach Anspruch 9, **dadurch gekennzeichnet, dass** die Verbindungsmittel des ersten Elements aus einer VGA- oder SVGA-Steckdose oder einer anderen Videobuchse bestehen, die dazu bestimmt ist, mit dem entsprechenden Stecker des Computerbildschirms oder des Videoprojektors verbunden zu werden.

11. Computer nach Anspruch 10, **dadurch gekennzeichnet, dass** das erste Element (2) in Form eines Zwischenbauteils vorliegt, das außerdem einen VGA- oder SVGA-Stecker oder einen anderen Videostecker enthält.

12. Computer nach Anspruch 9, **dadurch gekennzeichnet, dass** die Verbindungsmittel (2.2) des ersten Elements (2) aus Verbindern für analoge oder digitale Audio-/Videosignale und/oder Daten bestehen, die dazu bestimmt sind, mit den entsprechenden Verbindern des Computerbildschirms oder des Videoprojektors verbunden zu werden.

13. Computer nach einem der Ansprüche 1 bis 4, **dadurch gekennzeichnet, dass** das dritte Element ein Element, das nur den Ton wiedergibt, wie ein HiFi-System, ein Musikverstärker mit zugehörigen Lautsprecherboxen, ein Autoradio, ein Radio, ein Walkman, ein Musikaufzeichnungsgerät, oder jedes andere Tonwiedergabe-, Tonübertragungs- und Tonaufzeichnungssystem ist.

14. Computer nach Anspruch 13, **dadurch gekennzeichnet, dass** die Verbindungsmittel des ersten Elements aus Verbindern für analoge oder digitale Audiosignale und/oder Daten bestehen, die dazu bestimmt sind, mit den entsprechenden Verbindern des Tonwiedergabe-, Tonübertragungs- oder Tonaufzeichnungssystems verbunden zu werden.

15. Kommunikationsverfahren, das die drei folgenden unterschiedlichen Elemente verwendet:
a) ein erstes Element (2), das eine Zentraleinheit aufweist, die Mittel zum Speichern und Ausführen der Rechnerprogramme und Datenspeichermittel enthält,
b) ein zweites Element (3), das eine Dateneingabevorrichtung, eine Kommunikationsschnittstelle mit einem fernen Netz (6) und drahtlose Übertragungsmittel (1) mit dem ersten Element aufweist,
c) ein drittes Element (12), das Anzeigemittel und/oder Tonwiedergabemittel und Mittel (9) zur Verbindung mit dem ersten Element aufweist,
wobei das erste Element (2) eine reduzierte Größe im Taschenformat hat und außerdem Verbindungsmittel (2.2) mit dem dritten Element (12) und Mittel (2.3) zum Empfang der vom zweiten Element (3) gesendeten Signale bzw. zum Senden der vom zweiten Element empfangenen Signale aufweist;
wobei das Verfahren **dadurch gekennzeichnet ist, dass** es gleichzeitig das zweite Element (3) nutzt als:
- Kommunikationsgateway zwischen dem fernen Netz (6) und dem ersten Element (2),
- für den Benutzer des zweiten Elements (3) als Mittel zum Senden von Befehlen, die vom ersten Element (2) empfangen und interpretiert werden.

16. Kommunikationsverfahren nach Anspruch 15, **dadurch gekennzeichnet, dass** es einen Computer nach einem der Ansprüche 2 bis 14 verwendet.
